# EUROPÄISCHE PATENTSCHRIFT

(11) **EP 1 118 130 B1**
(45) Veröffentlichungstag und Bekanntmachung des Hinweises auf die Patenterteilung: **07.01.2004**
(21) Anmeldenummer: 99953554.5
(22) Anmeldetag: 20.08.1999
(51) Int. Cl.: H01M 4/88, H01M 8/10

(54) **SIEBDRUCKPASTE UND SIEBDRUCKVERFAHREN ZUR HERSTELLUNG EINER GASDIFFUSIONSELEKTRODE**
SCREEN PRINTING PASTE AND METHOD FOR PRODUCING A GAS DIFFUSION ELECTRODE
PATE POUR LA SERIGRAPHIE ET PROCEDE DE SERIGRAPHIE POUR LA PRODUCTION D'UNE ELECTRODE A DIFFUSION GAZEUSE

(30) Priorität: 26.08.1998 DE 19838786
(43) Veröffentlichungstag der Anmeldung: 25.07.2001
(73) Patentinhaber: SIEMENS AKTIENGESELLSCHAFT, 80333 München (DE)
(72) Erfinder: DATZ, Armin, D-91099 Poxdorf (DE); SCHRICKER, Barbara, D-91054 Buckenhof (DE); WAIDHAS, Manfred, D-90427 Nürnberg (DE); OTSCHIK, Peter, D-01728 Possendorf (DE); SCHAFFRATH, Winfried, D-01307 Dresden (DE)
(86) Internationale Anmeldenummer: PCT/DE1999/002620
(87) Internationale Veröffentlichungsnummer: WO 2000/013242

(56) Entgegenhaltungen:
- WO-A-96/29752
- GB-A- 2 336 712
- US-A- 4 229 490
- DATABASE CHEMABS [Online] CHEMICAL ABSTRACTS SERVICE, COLUMBUS, OHIO, US TADA, TOMOYUKI: "Manufacture of electrodes for polymer solid-electrolyte fuel cells" retrieved from STN Database accession no. 127:223008 CA XP002130996 & JP 09 223503 A (TANAKA KIKINZOKU KOGYO K. K., JAPAN;WATANABE, MASAHIRO; STONEHART ASSO) 26. August 1997 (1997-08-26) & US 5 871 552 A (TOMUYUKI TADA) 16. Februar 1999 (1999-02-16)

## Beschreibung

Die Erfindung bezieht sich auf ein Siebdruckverfahren zur Herstellung von Gasdiffusionselektroden. Daneben bezieht sich die Erfindung auch auf die dabei verwendete Siebdruckpaste.

Eine PEM(Polymer Electrolyte Membrane)-Brennstoffzelle hat als Kernstück eine Membran-Elektroden-Einheit, die aus einer Membran mit beidseitig jeweils einer Elektrode, die eine Elektrokatalysatorschicht umfaßt, aufgebaut ist. Die Elektrode hat bevorzugt einen festen, gasdurchlässigen und elektrisch leitfähigen Träger, z.B. Kohlegewebe oder -papier, der zwecks Hydrophobierung bevorzugt mit einer Polymer-Suspension hydrophobiert ist. Auf diesen Träger ist eine Elektrokatalysatorschicht aufgebracht, die ihrerseits wieder hydrophobiert wird.

Das Polymer zur Hydrophobierung wird im folgenden Polymer A genannt: Es handelt sich dabei um Polymere wie z.B. PTFE, d.h. Polytetrafluorethylen, das unter dem Handelsnamen TEFLON® bekannt ist. Das Polymer A kann sowohl in dem Träger als auch in der Elektrokatalysatorschicht enthalten sein.

Der notwendige Gehalt an Polymer A zur Hydrophobierung der Elektrokatalysatorschicht beträgt bisher in der Regel 20-60 Gew.-%, wobei ein hoher Gehalt an Polymer A, wie z.B. Teflon, die Aktivität des Platinkatalysators hemmt, die Kontaktwiderstände erhöht und die Porosität der Elektrode verringert (Watanabe, J. Elektroanal. Chem. 195 (1985) 81-83), d.h. sich nachteilig auf das System auswirkt. Das Polymer A zur Hydrophobierung der Elektrokatalysatorschicht kann deshalb auch als "Katalysatorhemmer" bezeichnet werden,

Bei den bislang bekannten Elektroden ist außer einem hohen Gehalt an Polymer A zur Hydrophobierung der Elektrokatalysatorschicht (20 - 60 Gew.-%, bezogen auf den Gehalt an metallischem Katalysator) auch die Homogenität der Dicke der Elektrokatalysatorschicht ein Problem. Es besteht ein Bedarf, ein geeignetes Herstellungsverfahren, das kostengünstig und massenfertigungstauglich eine gleichmäßige Beschichtung des Trägers mit trockenem Katalysatorpulver in geringen Schichtstarken von 3-40µm ermöglicht, zu schaffen.

Nach der konventionellen Methode (Watanabe, J. Electroanal. Chem. 195 (1985) 81-83; J. Elektroanal.Chem. 197 (1986) 195-208 M. Uchida, J. Elektrochem. Soc., 142 (1995) 463-468) wird eine trockene pulverisierte Mischung aus vorher mit PTFE hydrophobiertem Katalysatorpulver auf den ebenfalls hydrophobierten Träger gepreßt. Zur Herstellung des Ausgangsmaterials wird zunächst das Kohlepulver intensiv mit der PTFE-Dispersion gemischt und dann oberhalb einer Temperatur von 280°C getrocknet. Dabei wird das in der Dispersion enthaltene oberflächenaktive Netzmittel (Triton X 100) entfernt. Das Netzmittel wird eingesetzt, um die schlechten Verarbeitungseigenschaften, die durch den hohen Gehalt an Polymer A in der Katalysatorpaste entstehen, auszugleichen. Anschließend wird das Gemisch pulverisiert.

Letzteres Verfahren ist aufwendig und eine gleichmäßige Dicke der Elektrokatalysatorschicht in geringen Schichtstärken läßt sich technisch nur schwer und in geringen Stückzahlen herstellen. Nachteilig ist zudem bei diesem Verfahren, daß
- ein hoher Gehalt an Polymer A zur Hydrophobierung der Elektrokatalysatorschicht enthalten ist, und
- zur Verarbeitung ein Netzmittel zugesetzt wird, das extra entfernt werden muß und störende Rückstände hinterläßt.

Das Siebdrucken ist eine bekannte Technik zur Herstellung einer gleichmäßig dünnen Schicht. Das Siebdruckverfahren für den Aufbau eines elektrochemischen Systems ist bereits bekannt. Gemäß der US 4 229 490 A muß dafür der Siebdruckpaste, die Teflondispersion, Graphit und Platinschwarz enthält, zur Stabilisierung wieder über 50 Gew.-% des Netz- oder Dispergiermittels "Triton X 100" zugesetzt werden. Der zur Hydrophobierung eingesetzte Teflonanteil in der Siebdruckpaste und damit der in der resultierenden Elektrokatalysatorschicht vorhandene Anteil beträgt ca. 25 Gew.-%. Die Paste wird auf einen festen Träger, z.B. Kohlepapier gedruckt, das nochmals 60 Gew.-% Teflon enthält. Es ergibt sich ein Gesamtgehalt an Teflon von ca. 85.-%. Nachteilig an der mit diesem Verfahren hergestellten Elektrode ist außer dem hohen Gehalt an Polymer A zur Hydrophobierung der Elektrokatalysatorschicht auch das in über 50 Gew.-% der Katalysatorpaste zugesetzte Netzmittel.

Daneben ist aus der WO 96/29752 A1 eine Kationen-Austauschmembran bekannt, die aus Polymeren bestehen und auch weitere Füllmaterialien enthalten. Diese Membran soll unmittelbar zur Reaktion mit Methanol als Brennstoff geeignet sein.

Ausgehend vom abgehandelten Stand der Technik ist es Aufgabe der Erfindung, das bekannte Siebdruckverfahren zur Herstellung einer Gasdiffusionselektrode bezüglich der dabei verwendeten Siebdruckpaste zu verbessern.

Diese Aufgabe wird bezüglich des Verfahrens durch den Patentanspruch 1 gelöst. Dabei wird eine Siebdruckpaste gemäß Patentanspruch 2 verwendet.

Für das erfindungsgemäße Verfahren wird der Siebdruckpaste außer dem metallischen Katalysator und dem für das Siebdrucken geeigneten hochsiedenden Lösungsmittel als Binder ein Polybutylacrylat-Polymethacrylat-Copolymerisat zugesetzt.

Bei der erfindungsgemäßen Siebdruckpaste ist der metallische Katalysator vorteilhafterweise Platinschwarz oder Platin auf Kohlenstoff. Als geeignete Lösungsmittel werden ein Ester und/oder ein Keton und/oder ein Alkohol, besonders bevorzugt Glycolsäurebutylester, Cyclohexanon und/oder Terpineol, eingesetzt.

Mit der Erfindung kann ein Siebdruckverfahren zur Herstellung einer Gasdiffusionselektrode realisiert werden mit einer Siebdruckpaste, die Polymer A in einer Menge von 0 bis maximal 10 Gew.-%, bezogen auf den Gehalt an metallischem Katalysator, zumindest einen metallischen Katalysator und ein hochsiedendes Lösungsmittel umfaßt. Dies bedeutet, daß die Siebdruckpaste frei von Netzmittel und entweder auch frei von Polymer A ist oder Polymer A nur in geringen Mengen kleiner 10 Gew.-%, bezogen auf den Gehalt an metallischem Katalysator, enthält. Polybutylacrylat-Polymethacrylat-Copolymerisat als Polymer B wird dagegen durch das Ausheizen so entfernt, daß keine für die Verwendung als Gasdiffusionselektrode störenden Rückstände verbleiben.

Weitere Einzelheiten und Vorteile der Erfindung ergeben sich aus der nachfolgenden Beschreibung von Ausführungsbeispielen in Verbindung mit den Patentansprüchen. Es wird die Herstellung einer Gasdiffusionselektrode zum Einsatz in einer Brennstoffzelle beschrieben, die aus einem Träger, einer Elektrokatalysatorschicht und einer geeigneten Hydrophobierung besteht.

Als Elektrokatalysatorschicht wird die Schicht bezeichnet, die bevorzugt auf einem festen, gasdurchlässigen und elektrisch leitfähigen Träger der Elektrode aufgebracht ist und an deren katalytischer Oberfläche die anodische Oxidation des Brennstoffs zu Protonen oder die kathodische Reduktion des Sauerstoffs stattfindet. Die Elektrokatalysatorschicht umfaßt zumindest den metallischen Katalysator, der bevorzugt platinhaltig ist, der in reiner Form als Platinschwarz oder in verdünnter Form als Platin auf Kohle in der Katalysatorpaste eingesetzt werden kann. Bevorzugt enthält die Elektrokatalysatorschicht keine weiteren Bestandteile, weil nach der bevorzugten Ausführungsform der Erfindung das Siebdruckmedium, das der Katalysatorpaste zur Verarbeitung zugesetzt wird, durch Trocknen und Erhitzen der fertigen, d.h. beschichteten Elektrode entfernt wurde.

Zur Verarbeitung wird der Siebdruckpaste, die je nach Arbeitsschritt auch Kohle- oder Katalysatorpaste genannt wird, ein hochsiedendes Lösungsmittel als Siebdruckmedium, wie z.B. ein Ester, Keton und/oder ein Alkohol, insbesondere Glycolsäurebutylester, Cyclohexanon und/oder Terpineol, zugesetzt. Der Siebdruckpaste wird aber als Siebdruckmedium nicht allein - wie vom Stand der Technik bekannt - ein hochsiedendes Lösungsmittel, sondern auch noch als Binder ein Polymer B, nämlich Polybutylacrylat-Polymethylacrylat-Copolymerisat zugesetzt. Das Polymer B ist bevorzugt ausheizbar, insbesondere bei Temperaturen bis zu 400°C, und/oder hinterläßt nur Rückstände, die den Brennstoffzellenbetrieb nicht stören.

Die Elektrode ist eine gaspermeable, elektrisch leitfähige Schicht auf der Membran, die bevorzugt einen Träger mit einer Elektrokatalysatorschicht umfaßt. Als Träger oder Substrat wird bevorzugt ein Kohlegewebe oder ein Kohlepapier oder ein anderes poröses und elektrisch leitfähiges Substrat verwendet.

Die durch Auswiegen bestimmte Platinbelegung beträgt bei reinem Platinschwarz als Katalysator 2-3 mg/cm² und bei Platin auf Kohle als Katalysator je nach Platinbelegung der Kohle 0,15 bis 0,4 mg/cm².

Bei der Herstellung der Gasdiffusionselektrode wird nach dem Siebdruckverfahren und der anschließenden Verarbeitung die fertige Elektrode mit dem Polymer, A z.B. Teflon, hydrophobiert.

Es wurden Strom-Spannungs-Kurven von Membran-Elektroden-Einheiten mit erfindungsgemäßen Gasdiffusionselektroden durchgeführt, bei denen ein außergewöhnlich geringer Spannungsabfall bei hohen Stromstärken beobachtet werden konnte. Dies ist u.a. auf die geringe Diffusionshemmung, bedingt durch den geringen Gehalt an Polymer A und Schädigung der Hydrophobierung durch Netzmittelrückstand, innerhalb der porösen Elektrokatalysatorschicht zurückzuführen.

Ein besonderer Vorteil des mit beschriebener Siebdruckpaste ausgeführten Siebdruckverfahrens ist die verbesserte Homogenität der Schichtdicke, weil die Elektrokatalysatorpaste mit dem geringen bzw. ohne Zusatz an Polymer A besser zu verarbeiten ist.

## Patentansprüche

1. Siebdruckverfahren zur Herstellung einer Gasdiffusionselektrode mit einer Siebdruckpaste, die zumindest einen metallischen Katalysator und ein für das Siebdrucken geeignetes hochsiedendes Lösungsmittel umfasst, wobei in der Siebdruckpaste als Binder ein Polybutylacrylat-Polymethacrylat-Copolymerisat verwendet wird.

2. Siebdruckpaste zur Verwendung bei der Herstellung einer Gasdiffueionselektrode, die zumindest einen metallischen Katalysator und ein für das Siebdrucken geeighetes hochsiedendes Lösungsmittel umfasst, wobei als Binder ein Polybutylacrylat-Polymethacrylat-Copolymerisat enthalten ist.

## Claims

1. Screen-printing process for producing a gas diffusion electrode employing a screen-printing paste which comprises at least one metallic catalyst and a high-boiling solvent which is suitable for screen printing, the binder used in the screen-printing paste being a poly(butyl acrylate)-polymethacrylate copolymer.

2. Screen-printing paste for use in the production of a gas diffusion electrode, which comprises at least one metallic catalyst and a high-boiling solvent which is suitable for screen printing, also containing a poly(butyl acrylate)-polymethacrylate copolymer as binder.

## Revendications

1. Procédé par sérigraphie de production d'une électrode à diffusion gazeuse à l'aide d'une pâte de sérigraphie, qui comprend au moins un catalyseur métallique et un solvant à haut point d'ébullition approprié à la sérigraphie, un copolymère de poly(acrylate de butyle) et de polyméthacrylate étant utilisé comme liant dans la pâte de sérigraphie.

2. Pâte de sérigraphie destinée à être utilisée pour la production d'une électrode à diffusion gazeuse, qui comprend au moins un catalyseur métallique et un solvant à haut point d'ébullition approprié à la sérigraphie, un copolymère de poly(acrylate de butyle) et de polyméthacrylate étant contenu comme liant.
